# EUROPEAN PATENT APPLICATION

(11) **EP 4 270 425 A1**
(43) Date of publication of application: **01.11.2023**
(21) Application number: 22171940.4
(22) Date of filing: 05.05.2022
(51) Int. Cl.: H01F 27/14, H01F 27/40, H02H 5/08, G01F 23/64

(54) **A PROTECTION DEVICE FOR A LIQUID FILLED TRANSFORMER**

(30) Priority: 25.04.2022 IN 202231024255
(71) Applicant: Gupta, Rohit, 700106 Kolkata (IN)
(72) Inventor: GUPTA, Archit, Saltlake, Kolkata 400106 (IN)
(74) Representative: Cabinet Laurent & Charras

(57) **Abstract**

Disclosed herein a protection device for an liquid filled transformer, enclosed within a body, comprising a dipping tube affixed within an annular base; said annular base mounted onto a transformer enclosure, consisting of a portion immersed in the transformer tank and a portion outside and above the transformer tank; a transparent enclosure allowing said liquid from the transformer that it contains to be seen from substantially around its perimeter, an integrated float adapted to move up and down inside said transparent enclosure and to trigger an electrical contact while reaching a predetermined limit towards the bottom of the transparent enclosure; wherein said transparent enclosure comprises a first layer being a transparent glass tube having a predetermined visually ergonomical curvature containing said integrated float and a second outer layer being a curved transparent polymer protective shield that covers parts of said transparent glass tube, that is not surrounded by said body.

## Description

### FIELD OF THE INVENTION

The present invention relates to a transformer protection device (TPD). It is mounted on a transformer and used to monitor and protect liquid filled transformers used for transmission/distribution of electricity.

### BACKGROUND OF THE INVENTION

The invention regards a class of instrument called a 'transformer protection device (TPD)', also known as 'integrated protection relay', or 'DGPT2 (dissolved gas, pressure, temperature-2)', 'DMCR (detection, measurement and control relay)', amongst other trade names. It is mounted on and used to monitor and protect liquid filled transformers used for transmission/distribution of electricity.

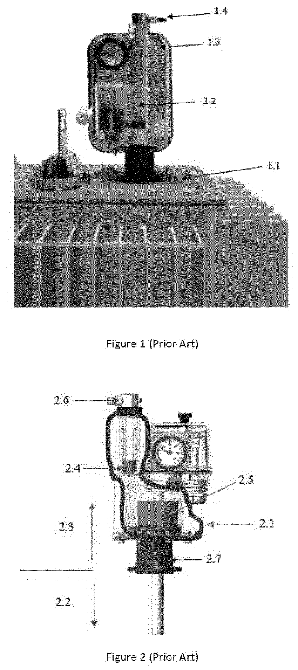

The instrument monitors and protects the transformer by measuring/displaying parameters like pressure in the transformer, liquid temperature, gas accumulation volume and/or liquid level, and providing electrical contacts when preset values are exceeded. The instrument can also provide outputs that can help read remotely the value of some of these parameters. Figure 1 shows an example of a conventional TPD mounted on a transformer.

In most relevant types of liquid filled transformers, the TPD is oriented to collect gases that get generated inside the transformer due to various faults. These gases rise due to their inherent buoyancy, and due to purposeful arrangement of transformer and TPD the gasses are collected in the TPD. The TPD contains a 'gas-liquid viewing enclosure' (1.3), a see-through section which partially contains and displays the gas collection. In nominal conditions, the 'gas-liquid viewing enclosure' is completely full of liquid. When gas accumulates in the TPD it displaces liquid in the 'gas-liquid viewing enclosure' and this is clearly visible. The volume of collected gas may be measured off markings on said enclosure.

The volume of gas collected in the TPD can provide an indication of the seriousness of the fault, and when preset volumes of gases are collected, electrical contacts can be triggered. Different natures of faults cause the formation of distinct gases, and the color of the gas can indicate the type of fault that occurred in the transformer. A petcock (1.4) is also present in the TPD which can be used to remove/collect said gases and for evaluation to further establish the type of fault within the transformer.

The TPD can in addition, for some types of liquid filled transformers, provide an indication if sufficient liquid is available in the transformer. In these types of transformers, if the liquid level is low (say due to a leak or theft), it will be visible in the gas-liquid viewing enclosure in the same manner as collection of gas generated due to a fault.

Transformers need to be protected against moisture ingress and ingress of unprocessed external air into the transformer tank. Moisture or water ingress into the transformer liquid can lead to deterioration of the insulating properties of the liquid and other parts, and can reduce the life of a transformer, cause faults, damage, and failure of the transformer. Additionally, leakage of liquid from a transformer in part because the liquid is needed for insulation, and in some conditions liquid leakage may lead to unprocessed external air ingress into the tank- potentially causing problems as identified above.

### The Description of Known Art (refer Figs 2, 3, 4, 5, 6 and 7): i) Type 1: Full polymer body type, 360° multidirectional view (refer Fig. 2)

The bottom of the base (2.7) mounts onto a transformer enclosure, with part of TPD protruding outside the transformer enclosure (2.3) and part of the TPD inside the transformer (2.2)

In this design, nearly the entire TPD above the base is made of a semitransparent polymer, including the integrated gas-liquid viewing enclosure (2.1).

The gas-liquid viewing enclosure is physically connected to the inside of the transformer tank through the base, such that this space effectively becomes part of the transformer enclosure.

During commissioning of the transformer, the petcock (2.6) is opened to release trapped air, with the result that the gas-liquid viewing enclosure becomes completely full of liquid

When gas is generated in the transformer, it rises through buoyancy and by the shape and arrangement of the transformer into the TPD through the base and into the gas liquid viewing enclosure. This gas rises towards the petcock, and collects at the highest available area, displacing liquid.

The indicating float (2.4) inherently floats on liquid, and hence indicates how much gas has been accumulated, which can be read off markings on the enclosure.

When the volume of gas in the TPD increases further, the level of the switch operation float (2.5) will at some point will start to fall. When this float falls below a predetermined threshold, it will trigger an electrical contact that can be connected to an external alarm, or tripping of the transformer system.

In this design, the level of liquid-gas is clearly visible from all directions

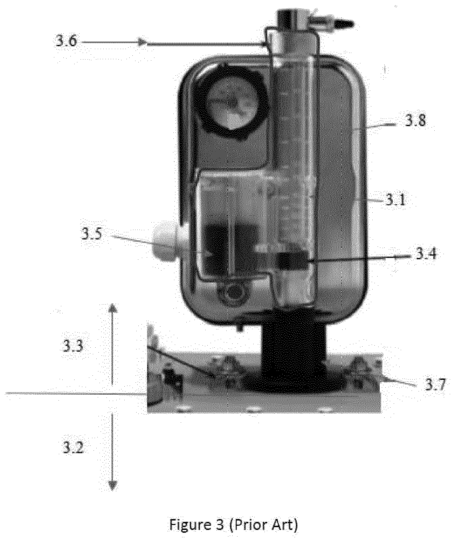

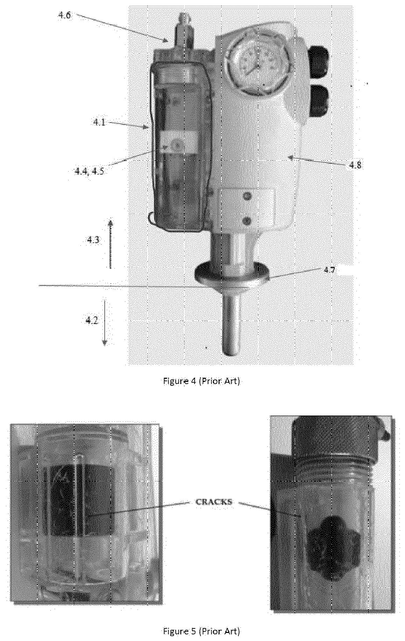

### ii) Type 2A and 2B: Separate body with polymer gas-liquid viewing enclosure (approx. 120-180° multidirectional view) (refer Fig. 3 and 4)

The bottom of the base (3.7, 4.7) mounts onto a transformer enclosure, with part of TPD protruding outside the transformer enclosure (3.3, 4.3) and part of the TPD inside the transformer (3.2,4.2)

In these designs, most of the TPD equipment is enclosed within the body (3.8, 4.8), but the gas-liquid viewing enclosure (3.1, 4.1) is mostly made of semitransparent polymer.

As in type 1, gas-liquid viewing enclosure is physically connected to the inside of the transformer tank through the base, such that this space effectively becomes part of the transformer enclosure.

During commissioning of the transformer, the petcock (3.6, 4.6) is opened to release trapped air, with the result that the gas-liquid viewing enclosure becomes completely full of liquid

When gas is generated in the transformer, it rises through buoyancy and by the shape and arrangement of the transformer into the TPD through the base and into the gas liquid viewing enclosure. This gas rises towards the petcock, and collects at the highest available area, displacing liquid.

In type 2A (figure 3), there is a separate switch operation float (3.5) and separate indicating float (3.4). The indicating float rises to the highest level of liquid, thus allowing to measure the amount of gas collected by referring to markings on the semitransparent gas-liquid viewing enclosure (3.1)

When the switch operation float (3.5) nears the bottom of its enclosure, it triggers electrical contacts, indicating that the gas accumulated in the TPD exceeds a predetermined volume

In type 2B (figure 4), the indicating float and switch operation float are integrated into one float. (4.4/4.5). This float both indicates the amount of gas accumulated in the TPD (markings on the semitransparent gas-liquid viewing enclosure), and triggers an electrical contact when the float nears to bottom of the enclosure, meaning that the gas accumulated has exceeded a predetermined limit.

In these two designs, with the curved polymer gas-liquid enclosure projecting outside the body, the gas-liquid level is visible from approximately 120-180° perspective

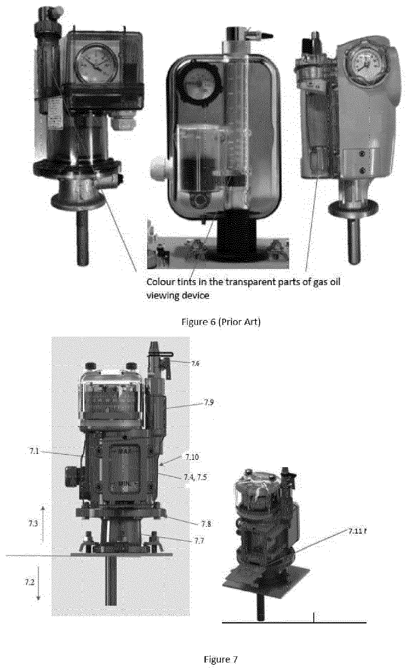

### iii)Type 3: Metal body with metal + glass gas-liquid window and metal cover (monodirectional view) (refer Fig. 7)

The bottom of the base (7.7) mounts onto a transformer enclosure, with part of TPD protruding outside the transformer enclosure (7.3) and part of the TPD inside the transformer (7.2).

In this design, nearly the gas-liquid enclosure (7.10) is mostly made of opaque metal, with a glass window (7.1) on one side of the enclosure.

The parts of this TPD that are directly connected to liquid from the transformer include the insides of the base (7.7), the entire gas-liquid enclosure (7.10, including the glass window 7.1), right up to the extension of the gas-liquid enclosure (7.9) and the petcock (7.6).

After commissioning, Gas formation from the transformer would enter the TPD through the base, and would seek the highest level and start settling below the petcock. As the opaque gas liquid enclosure (7.9) and then the main enclosure 7.10 accumulates gas, the liquid level will reduce until the reduction of liquid level starts being visible through the glass window (7.1) in the gas-liquid viewing enclosure (7.10).

In this type, the float mechanism for detecting quantity of gas and to trigger electrical contact at preset volume of gas accumulation (7.4,7.5) is placed inside the main gas-liquid enclosure (7.10).

A foldable opaque metal cover (7.11) protects the glass viewing window from damage, and would cover the glass window at all times, except when an operator needs to observe gas-liquid levels. An operator would physically fold the metal cover away to reveal the glass portion of the gas-liquid viewing enclosure, and make required observations.

### Drawbacks of the Known Art:

Currently available designs have distinct drawbacks depending on the type considered, which are detailed below

### i) Type 1 and 2A and 2B (refer Fig. 2, 3 and 4)

1) These above types of TPD require a polymer for the gas-liquid viewing enclosure (2.1, 3.1, 4.1) that that is simultaneously see through, compatible to be in direct contact with pressurized and hot liquid from the transformer on the inside and may be exposed to all possible outdoor elements (UV from sunlight, rain, heat, cold, ice, acidity and alkalinity) on the outside. The polymer must additionally not react with and contaminate the transformer liquid in the presence of UV light.

Since the TPD is expected to last the life of the transformer, this polymer may be expected to last as long as 20 years in subject harsh conditions.

This kind of polymer formulation is usually specialized, rare and expensive, and adds critical risk of unavailability of polymers compliant with such specific requirements, leading to possible uncontrolled disruption in manufacturing and/or increase in cost

2) Despite the use of compliant material, there are instances where this see-through polymer does not adequately weather extreme elements (especially when some chemical contaminants are present in the environment or rainwater), and can become further discolored, scratched, leakage or even break. Breakage is serious and would expose the transformer liquid-gas to outside air and potentially causing damage to and/or failure of the transformer (see A-last para)

Discoloration of the see-through polymer due to UV (from sunlight) in particular is a serious problem- where the see-through polymer gas-liquid viewing enclosure changes color and can become more and more opaque with time. This makes it hard to see the gas-liquid levels inside, and impossible to see the color of the gas collected- and forcing operators to have to come closer to the equipment to see gas-liquid levels if they can see it at all, and nearly impossible to analysis gas color related cause of issue in transformer without removing the gas from the TPD into a separate device.

3) If the polymer gas-liquid viewing enclosure is cleaned with an incompatible chemical, it can develop cracks (Figure 5). The list of prohibited incompatible solvents usually list into the dozens, and includes many commonly used cleaning substances. Any cracks can cause leakage of liquid from inside the enclosure, and/or ingress of air into the transformer, potentially causing harm to, or even failure of the transformer as disclosed above.

It should be noted that since the TPD is installed on relatively small transformers which are installed over extremely wide geographical regions and private property (as opposed to larger transformers that may be concentrated in walled substations) - and may be maintained by any number of people who may or may not be familiar with what they cannot use to clean the TPD. Hence use of wrong cleaning chemical and associated problems are widespread.

4) Since these polymer gas-liquid enclosures may be mounted above a transformer, they are relatively vulnerable to accidental damage by maintenance workers, animals and during transportation and installation. All these designs contain protruding polymer enclosures that contain liquid, and any impact can lead to leakage of liquid and ingress of moisture into the transformer.

5) All liquid-gas viewing enclosures made of polymer as above are not perfectly transparent but have a significant color tint (see figure 6). This color tint makes it difficult or impossible to ascertain the color of collected gas while the gas is still within the TPD. (The color of the gas can give an indication of type of failure in the transformer). Hence, in these existing TPDs, the gases must be removed using the petcock into another external enclosure to ascertain color. To do this requires additional steps, equipment, time and longer shutdown of the transformer.

6) If the gas-liquid viewing enclosure is damaged, degraded, decolorized, faded cracked or leaking in any way, generally the entire TPD needs to be replaced. The gas-liquid viewing enclosures of the subject models cannot generally be replaced on site because they contain the functional float(s) and other items that are very hard to assemble on site. More significantly, even if an expert was to attempt to replace the see-through parts of the liquid-gas viewing enclosure on an TPD installed on a transformer, it would be impossible to do so without exposing the liquid-gas from the transformer to outside air, possibly causing damage to the transformer

Even replacing the TPD involves exposing the liquid-gas inside to outside air, causing the same problems described above. Additionally, most transformers where the TPD is used are vacuum filled and hermetically sealed- and the vacuum filling process generally needs to be repeated after the inside of the transformer is exposed to air for any reason. The transformer also needs to be shut down during this entire process. The cost of replacing the TPD or just the see through enclosure (practically impossible) therefore can exceed the cost of the TPD by several times or orders of magnitude.

### ii) Type 3 (refer Fig. 7)

1) In metal cover (7.11) deployed condition, the gas-liquid levels are not visible without having to physically touch the transformer and fold the metal cover- to do this, one would usually have to turn off the transformer for safety of personnel. In other existing art, namely types 1, 2A and 2B, this level is visible without needing to touch the transformer and operators will often in routine inspections observe the gas-liquid levels from safety afar without needing to turn off the transformer.

Turning off the transformer adds both direct and indirect cost and time, making use of this type of instrument more expensive. It also creates the possibility that operators will not check level at all, something that happens intuitively and in a glance with other existing art.

2) The gas-liquid viewing enclosure (7.10) is dark, making the level/qty of gas-liquid hard to see: Since light enters the glass liquid enclosure from only one direction (the same direction one is viewing from), the transition from liquid to gas is not very easy to observe as compared to existing art type 1, 2A and 2B-which due to curved gas-liquid viewing enclosures are relatively much better lit- and provide a much clearer view of how much gas has accumulated.

3) Gas accumulated is not visible at all till 7.9, the opaque gas-liquid enclosure extension is completely full of gas. On visual inspection, in other existing art even the slightest amount of gas accumulation is clearly visible. In this type of TPD, it is not possible to visually observe accumulation of gas until considerable amount of gas has accumulated and the level of gas reaches the glass portion of the enclosure (7.1).

This means that a fault/defect in a transformer that is producing gas may be observed later than it would be with the other existing art- reducing the effectiveness of detection and protection provided by the TPD.

4) The glass window (7.1) within the enclosure (7.10) is mono-directional, visible from only one direction. The transformer may be mounted on a pole at a height, or behind a mesh, and during visual checks one may not have clean line of sight to every spot.

Even if the protective metal cover is folded away, the gas-liquid level is visible from less directions, making it more likely that in site conditions the gas-liquid level will not be visible from easily accessible spaces. A ladder or other equipment may be needed, it may be needed to turn off the transformer to observe this level, and the operator may simply not check this level if it is not easily and immediately visible from a wide range of viewpoints.

5) Since there are objects of many colors at several depths behind the glass window, these colors interfere with the observed color of gas.

Therefore, there remain a need to overcome disadvantages in each of existing designs, creating a design that is user friendly, intuitive, and reliable.

### SUMMARY OF THE INVENTION

The following presents a simplified summary of the invention in order to provide a basic understanding of some aspects of the invention. This summary is not an extensive overview of the present invention. It is not intended to identify the key/critical elements of the invention or to delineate the scope of the invention. Its sole purpose is to present some concept of the invention in a simplified form as a prelude to a more detailed description of the invention presented later.

The main object of the invention is overcome disadvantages in each of existing designs, creating a design that is user friendly, intuitive, and reliable, and provides an improved transformer protection device with robust multidirectional viewing enclosure. It is intended that the invention allow viewing of gas-liquid levels from a wide angle of viewing, maximizing the chances that an operator will be able to observe the level easily and intuitively from a range of available viewpoints. The objective is to maximize the possibility that an operator be able to notice any abnormal liquid-gas conditions at a glance from afar from a wide variety of perspectives, enabling the operator to know useful information about the transformer without having to get close to it or even perhaps intending to gather this information. The gas-liquid viewing enclosure needs to allow light to enter from multiple directions, and not just from the same perspective that an operator may be viewing the liquid-gas level in the enclosure. This is to ensure that the liquid-gas boundary and the float are clearly illuminated and hence more easily visible than if the ambient light opening is mono-directional (as discussed above) and in the same direction as the viewing area.

Another object of present invention is to avoid any physical contact of liquid from transformer with any see-through polymer. Contact of liquid from the transformer with any see-through polymer carries significant risks and problems (as discussed above). The invention aims to eliminate all the risks and problems associated with the direct contact of liquid with the see-through polymer and not have any see through polymer in physical contact with liquid from the transformer, removing the need to use critical, expensive and rare materials that are compatible for contact with hot pressurized liquid from the transformer and suitable for long term outdoor use and may still be incompatible with many cleaning agents and unsuitable for use in some extreme environments.

Yet another object of present invention is to ensure no visual obstruction for the gas-liquid viewing enclosure. It is desired that while the TPD is deployed on site, there should not be any built in obstruction (such as an opaque cover) for an operator to view the gas-liquid levels in the TPD. Any obstruction leads to drawbacks highlighted above.

Further object of present invention is to provide the see through on the viewing enclosure to be as prominent as possible for easy and intuitive viewing, while at the same time, making the see through portion extremely robust and resilient to damage from external impact, misuse, transport, animals, and other practical realities.

It is another object of present invention to avoid having any color tint on the see-through portion of the gas-liquid viewing enclosure, so that it be possible to accurately determine the color of the gas collected inside the TPD without having to remove the gas from the TPD. It is further desired that the color of gas in the liquid-gas viewing enclosure be visible against a neutral color background, and not against other items or colors so that color of the gas is determinable easily and accurately.

Further object of present invention is to ensure that there be minimum possible opaque height above the see through portion of the gas-liquid viewing enclosure where gas can accumulate unseen by an operator looking at the TPD. A smaller opaque portion means that a potential fault in the transformer may be visible earlier to an operator inspecting gas-liquid levels visible on the TPD.

Yet another object of present invention is that in case of external damage or deterioration to/of the transparent parts of gas-liquid viewing enclosure by means as described in the portions of said assembly exposed to such damage should be able to be damaged without risk of the liquid from the transformer leaking, or the liquid be exposed to outside air. Additionally, the aim of present invention is to ensure that such transparent portions of the gas liquid viewing enclosure most exposed to outside damage/ deterioration be replaceable at site without needing to expose the liquid in the transformer to outside air during replacement.

Further object of present invention is to enable the transparent parts of the gas-liquid viewing enclosure easy to clean and compatible with a wide range of cleaning agents without the risk of discoloration or cracking.

One aspect of present invention relates to a protection device for a liquid filled transformer, enclosed within a body, comprising:
a dipping tube affixed within an annular base;
said annular base mounted onto a transformer enclosure, consisting of a portion immersed in the transformer tank and a portion outside and above the transformer tank;
a transparent enclosure allowing said liquid/gas from the transformer that it contains to be essentially visible from substantially around its perimeter,
an integrated float adapted to be moved up and down inside said transparent enclosure and to operatively trigger an electrical contact while reaching a predetermined limit towards the bottom of the transparent enclosure;
wherein said transparent enclosure comprises a transparent glass tube having a predetermined visually ergonomical curvature containing said integrated float.

In another aspect the present invention relates to an liquid filled transformer, enclosed within a body, comprising:
a dipping tube affixed within an annular base
said annular base mounted onto a transformer enclosure, consisting of a portion immersed in the transformer tank and a portion outside and above the transformer tank;
a transparent enclosure allowing said liquid/gas from the transformer that it contains to be essentially visible from substantially around its perimeter,
an integrated float adapted to be moved up and down inside said transparent enclosure and to operatively trigger an electrical contact while reaching a predetermined limit towards the bottom of the transparent enclosure;
wherein said transparent enclosure comprises a first layer being a transparent glass tube having a predetermined visually ergonomical curvature containing said integrated float and a second outer layer being a curved transparent polymer protective shield having a predetermined visually ergonomical curvature similar to the first layer, said second layer that covers parts of said transparent glass tube, that is not surrounded by said body.

In one of the embodiments of present invention, said transparent glass tube and said transparent polymer protective shield are separated with gap in between them, allowing the outer transparent layer to be damaged without affecting the inner transparent layer that contains the liquid from the transformer.

In another embodiment of present invention, said transparent polymer protective shield are rigidly attached with said body by means of screws.

In another embodiment of present invention, said transparent polymer protective shield are optionally removably attached with said body by means of screws.

In yet another embodiment of present invention, said polymer shield comprises markings to manually measure the liquid-gas levels visible on the device.

In a further embodiment of present invention, the device further comprises a gasket compressed between the transparent protective shield and the body preventing rainwater from entering the space between the protective shield and glass tube.

In yet another embodiment of present invention, the transparent polymer shield is adaptively curved.

In a further embodiment, the glass tube and transparent polymer shield are adaptively curved and project out from the body (8.8) of the TPD such that the gas-liquid levels are visible through 180° approximately allowing an operator to intuitively notice the gas liquid levels from afar.

In another embodiment of present invention, the shape of the transparent parts is adapted to allow natural light to come into the gas-liquid viewing enclosure from a wide variety of directions, lighting up the liquid-gas level threshold and the float that through its natural buoyancy will hover at the gas-liquid level threshold.

Since both the glass tube and transparent polymer shield are curved and project out from the body of the TPD, the gas-liquid levels are visible from a wide range of perspectives (approximately 180-degree visibility), allowing an operator to intuitively notice the gas liquid levels from afar. The glass tube and the protective polymeric shield both are provided with a predetermined visually ergonomical curvature containing said integrated float. Such design of the glass tube provides a wide range of visibility. The shape of the transparent parts also allows natural light to come into the gas-liquid viewing enclosure from a wide variety of directions, lighting up the liquid-gas level threshold and the float that through its natural buoyancy will hover at the gas-liquid level threshold. The well-lit and prominent gas liquid viewing enclosure with multidirectional visibility allows operators maintaining the transformer to gather useful gas-liquid level information at a glance, from a wide range of possible viewing areas, from a distance, without having to touch the transformer to remove any opaque cover or similar device on the gas-liquid viewing enclosure. Further, the only transparent material that liquid from the transformer comes in contact with is glass- which is generally far better compatible with liquid than polymer formulations -leading to elimination of the possibility of any reaction between polymer and liquid under UV from the sun. Also, since glass is relatively far more nonreactive with atmospheric chemicals, solvents and cleaners compared to transparent polymers, only glass being in contact with liquid solves the problem of cracks, liquid leakage or ingress of air into the transformer due to use of incorrect cleaners, environmental chemicals. This reduces risk to the transformer as described above. Again, the transparent polymer protective shield, being separated by a gap from the glass tube, protects the glass tube from any external impact or damage. In case something external impacts the robust protective shield, it can be damaged or even break, without anything touching the glass tube that contains the liquid and is connected to the transformer enclosure. This prevents problems associated with air ingress and liquid leakage while making the large gas-liquid viewing enclosure overall extremely resilient to damage that may lead to liquid leaks or air ingress. Yet again, since the outer layer transparent polymer shield is just a protective cover, and not in contact with liquid from the transformer, it does not need to be made of any rare, expensive or difficult to find formulation polymer that is compatible with said liquid, simultaneously transparent, and resistant to outdoor elements thereby allowing to use polymers that are fully transparent with no tint, are widely and easily available with less chance of shortage. Additionally, because it is not exposed to liquid from the transformer, the transparent polymer shield can be made with far more robust materials compared with materials possible to use in existing art- increasing durability and reliability. Further, the protective polymer shield can easily be removed by opening a few screws between it and the body. Hence it is possible to replace the protective outer polymer shield (exposed to nearly all damage) easily on site, without exposing the transformer to outside air.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE ACCOMPANYING DRAWINGS

The above and other aspects, features and advantages of the embodiments of the present disclosure will be more apparent in the following description taken in conjunction with the accompanying drawings, in which:
Figure 1 illustrates an example of a transformer protection device mounted on a transformer (Prior Art).
Figure 2 illustrates Type 1 TPD: full polymer body type, 360° multidirectional view (Prior Art).
Figure 3 illustrates Type 2A: separate body with polymer gas-liquid viewing enclosure (approx. 180° multidirectional view) (Prior art).
Figure 4 illustrates Type 2B: separate body with polymer gas-liquid viewing enclosure (approx. 180° multidirectional view).
Figure 5 illustrates an example of cracks formed in the polymer due to use of incompatible cleaning chemical (Prior art).
Figure 6 illustrates color tints in see through gas-liquid viewing enclosure (Types 2,2A and 2B) (Prior Art).
Figure 7 illustrates Type 3: Metal body with glass gas liquid viewing window with metal cover (mono-directional view) (Prior Art).
Figure 8 illustrates TPD with multidirectional dual layer viewing enclosure according to present invention.
Figure 9 illustrates dual layer transparent gas liquid viewing enclosure parts shown individually according to present invention.
Figure 10 illustrates close-up of dual layer transparent gas liquid viewing enclosure showing gasket between outer layer (layer 2) and body according to present invention.
Figure 11 illustrates section view: gap between the two layers shown according to present invention.
Figure 12 illustrates gas-liquid levels visible from a wide variety of angles (approx. 180°) according to present invention.

Persons skilled in the art will appreciate that elements in the figures are illustrated for simplicity and clarity and may have not been drawn to scale. For example, the dimensions of some of the elements in the figure may be exaggerated relative to other elements to help to improve understanding of various exemplary embodiments of the present disclosure. Throughout the drawings, it should be noted that like reference numbers are used to depict the same or similar elements, features, and structures.

### DETAILED DESCRIPTION OF THE INVENTION

The following description with reference to the accompanying drawings is provided to assist in a comprehensive understanding of exemplary implementations of the invention.

It includes various specific details to assist in that understanding but these are to be regarded as merely exemplary.

Features that are described and/or illustrated with respect to one implementation may be used in the same way or in a similar way in one or more other implementations and/or in combination with or instead of the features of the other implementations.

Present invention relates to a protection device for a liquid filled transformer, enclosed within a body, comprising:
a dipping tube affixed within an annular base;
said annular base mounted onto a transformer enclosure, consisting of a portion immersed in the transformer tank and a portion outside and above the transformer tank;
a transparent enclosure allowing said liquid/gas from the transformer that it contains to be essentially visible from substantially around its perimeter,
an integrated float adapted to be moved up and down inside said transparent enclosure and to operatively trigger an electrical contact while reaching a predetermined limit towards the bottom of the transparent enclosure;
wherein said transparent enclosure comprises a transparent glass tube having a predetermined visually ergonomical curvature containing said integrated float.

The present invention further relates to an liquid filled transformer, enclosed within a body, comprising:
a dipping tube affixed within an annular base
said annular base mounted onto a transformer enclosure, consisting of a portion immersed in the transformer tank and a portion outside and above the transformer tank;
a transparent enclosure allowing said liquid/gas from the transformer that it contains to be essentially visible from substantially around its perimeter,
an integrated float adapted to be moved up and down inside said transparent enclosure and to operatively trigger an electrical contact while reaching a predetermined limit towards the bottom of the transparent enclosure;
wherein said transparent enclosure comprises a first layer being a transparent glass tube having a predetermined visually ergonomical curvature containing said integrated float and a second outer layer being a curved transparent polymer protective shield having a predetermined visually ergonomical curvature similar to the first layer, said second layer that covers parts of said transparent glass tube, that is not surrounded by said body.

In one of the embodiments of present invention, said transparent glass tube and said transparent polymer protective shield are separated with gap in between them, allowing the outer transparent layer to be damaged without affecting the inner transparent layer that contains the liquid from the transformer.

In another embodiment of present invention, said transparent polymer protective shield are rigidly attached with said body by means of screws.

In another embodiment of present invention, said transparent polymer protective shield are optionally removably attached with said body by means of screws.

In yet another embodiment of present invention, said polymer shield comprises markings to manually measure the liquid-gas levels visible on the device.

In a further embodiment of present invention, said device further comprises a small opaque gas liquid viewing extension above the transparent glass pipe.

In another embodiment of present invention, said device further comprises a petcock to release trapped air during commissioning of the transformer, with the result that the gas-liquid viewing enclosure becomes completely full of liquid.

In a further embodiment of present invention, the device further comprises a gasket compressed between the transparent protective shield and the body preventing rainwater from entering the space between the protective shield and glass tube.

In yet another embodiment of present invention, the transparent polymer shield is adaptively curved.

In a further embodiment, the glass tube and transparent polymer shield are adaptively curved and project out from the body of the TPD such that the gas-liquid levels are visible through 180° approximately allowing an operator to intuitively notice the gas liquid levels from afar.

In another embodiment of present invention, the shape of the transparent parts is adapted to allow natural light to come into the gas-liquid viewing enclosure from a wide variety of directions, lighting up the liquid-gas level threshold and the float that through its natural buoyancy will hover at the gas-liquid level threshold.

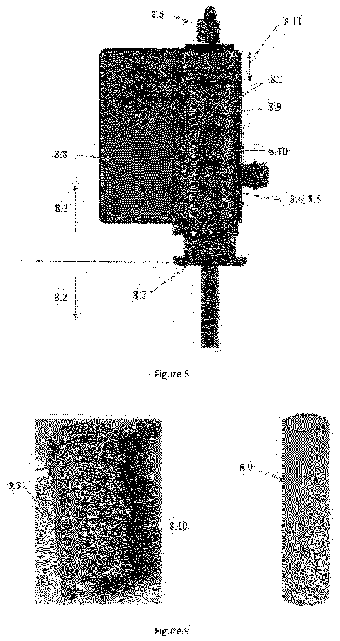

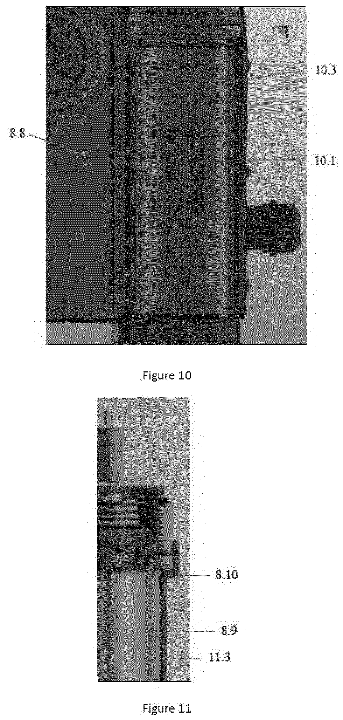

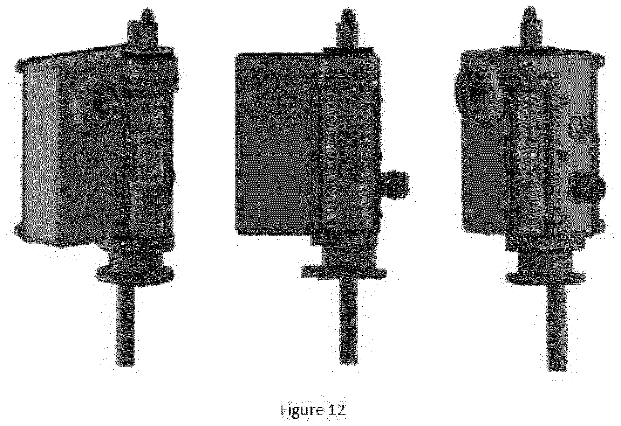

According to figure 8-12, the transformer protection device of present invention comprises of a base (8.7) that mounts onto a transformer enclosure and has portions that are immersed in the transformer tank (8.2) and that are outside and above the transformer tank (8.3). Most of the TPD equipment is enclosed within the body (8.8).

In the present invention, the device comprising of the gas-liquid viewing enclosure (8.1), and is constituted of two layers with several parts- the first inner layer being a transparent glass tube (8.9) that contains a single float (8.4, 8.5) and the second outer layer being a transparent polymer protective shield (8.10), a curved part that covers nearly all parts of the glass tube that is not surrounded by the body (8.8).

The protective polymer shield can easily be removed by opening a few screws between it and the body (8.8)

The glass tube (8.9) and protective polymer shield (8.10) are at a distance to one another, with a gap (11.3) in between. The glass tube and polymer sheet do not touch at any point. The polymer shield additionally has attached to it a gasket (10.1) that seals between itself and the body (8.8).

The markings (9.3) on the protective polymer shield (8.10) can be used to manually measure the liquid-gas levels visible on the TPD.

The integrated float (8.4,8.5) moves up and down with liquid-gas levels within the glass tube and triggers an electrical contact when gas-liquid levels reach a predetermined limit towards the bottom of the gas-liquid viewing enclosure. As the float is buoyant and floats on the liquid it indicates the liquid-gas levels through the transparent gas-liquid viewing enclosure. The petcock (8.6) can be used to release trapped air during commissioning.

A small opaque gas liquid viewing extension (8.11) is present above the transparent glass pipe, but the internal volume of this extension that can be occupied by gas is very small.

### Best Mode of working of the Invention:

As gas is generated in the transformer, it rises through buoyancy and by the shape and arrangement of the transformer into the TPD through the base and into the glass tube (8.9) of the gas liquid viewing enclosure (8.1). This gas rises towards the petcock, and collects at the highest available area, displacing liquid. The gas very quickly fills up the small available volume inside the opaque gas-liquid viewing extension (8.11) (volume relatively small compared to 7.9) and is immediately visible through the transparent glass tube and its protective transparent polymer shield (8.10).

Since both the glass tube and transparent polymer shield are curved and project out from the body (8.8) of the TPD, the gas-liquid levels are visible from a wide range of perspectives (Approx. 180° visibility), allowing an operator to intuitively notice the gas liquid levels from afar. The shape of the transparent parts also allows natural light to come into the gas-liquid viewing enclosure from a wide variety of directions, lighting up the liquid-gas level threshold and the float (8.4,8.5) that through its natural buoyancy will hover at the gas-liquid level threshold. The well-lit and prominent gas liquid viewing enclosure with multidirectional visibility allows operators maintaining the transformer to gather useful gas-liquid level information at a glance, from a wide range of possible viewing areas, from a distance, without having to touch the transformer to remove any opaque cover or similar device on the gas-liquid viewing enclosure.

If a maintenance operator observes collection of gas or a fall in liquid level, they can approach the TPD closer and will be able to see the color of the liquid more perfectly than in any existing art, as all the transparent bits of the gas-liquid viewing enclosure are completely transparent and without any color tint or coloration, and the largely neutral colored immediate backdrop to the gas (10.3) makes the gas color visible clear and accurate- allowing an operator to judge the color of collected gas and estimate corresponding root problem inside the transformer better than any existing art, without having to externally collect the gas in another enclosure.

The markings (9.3) on the transparent protective shield allow an operator to visually measure the volume of gas collected within the TPD

The only transparent material that liquid from the transformer comes in contact with is glass- which is generally far better compatible with liquid than polymer formulations - leading to elimination of the possibility of any reaction between polymer and liquid under UV from the sun. Since glass is relatively far more nonreactive with atmospheric chemicals, solvents and cleaners compared to transparent polymers, only glass being in contact with liquid solves the problem of cracks, liquid leakage or ingress of air into the transformer due to use of incorrect cleaners, environmental chemicals. This reduces risk to the transformer.

More options for polymer formulations as described above also means that the polymer used for the protective shield is more resistant to fading or discoloration under UV light from the sun and other environmental conditions than polymers that also need to be in contact with liquid. Since the glass tube is essentially immune to such fading, the invented TPD is far more resistant to such fading or discoloration than existing art type 1, 2A and 2B. Hence the present invention has a large, multidirectional gas-liquid viewing device that will stay transparent and for far longer than these existing art in more varied environmental conditions and is resistant to cleaning using a far wider spectrum of cleaning agents- reducing risk of mistakes by operators and reducing training needed for said operators.

Since the outer layer transparent polymer shield is just a protective cover, and not in contact with liquid from the transformer, it does not need to be made of any rare, expensive or difficult to find formulation polymer that is compatible with said liquid, simultaneously transparent, and resistant to outdoor elements. This allows us to use polymers that are fully transparent with no tint, are widely and easily available with less chance of shortage.

The transparent polymer protective shield, being separated by a gap (11.3) from the glass tube, protects the glass tube from any external impact or damage. In case something external impacts the robust protective shield, it can be damaged or even break, without anything touching the glass tube that contains the liquid and is connected to the transformer enclosure. This prevents problems associated with air ingress and liquid leakage while making the large gas-liquid viewing enclosure overall extremely resilient to damage that may lead to liquid leaks or air ingress.

The transparent polymer protective shield, being more exposed to physical and environmental damage, can be replaced on site easily by simply opening a few screws and installing a new shield. There is no need to expose the transformer liquid to air during the process of replacing the transparent part most exposed to damage- which is inevitable while replacing any transparent part of the liquid-gas viewing enclosure in all current art. There is also no need to remove the TPD from the transformer tank to replace this exposed transparent part.

In addition, even if the shield is damaged, faded scratched or degraded in some extreme condition, it can be removed temporarily without having to expose the liquid from the transformer to air- and color of accumulated gas can be ascertained accurately through the underlying glass tube- which is essentially immune to fading and degradation and is protected by the shield from damage and scratches. The shield can also be replaced with a new one, and the old damaged shield can be installed temporarily till a replacement is made available.

The gasket 10.1 compressed between the transparent protective shield and the body prevents rainwater from entering the space between the protective shield and glass tube. This keeps the inside of the transparent shield and outside of the glass pipe clean and streak free, keeping gas liquid-levels clearly visible over time without the need of regularly removing the shield to clean said regions.

It will be apparent to those skilled in the art that various modifications and variations can be made in the present invention without departing from scope and spirit of the invention. It is intended that present invention covers such modifications and variations disclosed in the description.

## Claims

1. A protection device for a liquid filled transformer, enclosed within a body (8.8), comprising:
a dipping tube affixed within an annular base;
said annular base mounted onto a transformer enclosure, consisting of a portion immersed in the transformer tank (8.2) and a portion outside and above the transformer tank (8.3);
a transparent enclosure (8.1) allowing said liquid/gas from the transformer that it contains to be essentially visible from substantially around its perimeter,
an integrated float (8.4, 8.5) adapted to be moved up and down inside said transparent enclosure (8.1) and to operatively trigger an electrical contact while reaching a predetermined limit towards the bottom of the transparent enclosure (8.1);
wherein said transparent enclosure (8.1) comprises a transparent glass tube (8.9) having a predetermined visually ergonomical curvature containing said integrated float (8.4, 8.5).

2. A protection device for a liquid filled transformer, enclosed within a body (8.8), comprising:
a dipping tube affixed within an annular base;
said annular base mounted onto a transformer enclosure, consisting of a portion immersed in the transformer tank (8.2) and a portion outside and above the transformer tank (8.3);
a transparent enclosure (8.1) allowing said liquid/gas from the transformer that it contains to be essentially visible from substantially around its perimeter,
an integrated float (8.4, 8.5) adapted to be moved up and down inside said transparent enclosure (8.1) and to operatively trigger an electrical contact while reaching a predetermined limit towards the bottom of the transparent enclosure (8.1);
wherein said transparent enclosure (8.1) comprises a first layer being a transparent glass tube (8.9) having a predetermined visually ergonomical curvature containing said integrated float (8.4, 8.5) and a second outer layer being a curved transparent polymer protective shield (8.10) having a predetermined visually ergonomical curvature similar to the first layer, said second layer that covers parts of said transparent glass tube (8.9), that is not surrounded by said body (8.8).

3. The device as claimed in claim 2, wherein said transparent glass tube (8.9) and said transparent polymer protective shield (8.10) are separated with gap (11.3) in between them, allowing the outer transparent layer to be damaged without affecting the inner transparent layer that contains the liquid from the transformer.

4. The device as claimed in claim 2, wherein said transparent polymer protective shield (8.10) are rigidly attached with said body (8.8) by means of screws.

5. The device as claimed in claim 2, wherein said transparent polymer protective shield (8.10) are optionally removably attached with said body (8.8) by means of screws.

6. The device as claimed in claim 2, wherein said polymer shield (8.10) comprises markings (9.3) to manually measure the liquid-gas levels visible on the device.

7. The device as claimed in claim 1 or claim 2, comprises a gasket (10.1) compressed between the transparent protective shield (8.10) and the body (8.8) preventing rainwater from entering the space between the protective shield (8.10) and the glass tube (8.9).

8. The device as claimed in claim 2, wherein the transparent polymer shield (8.10) is adaptively curved.

9. The device as claimed in claim 2, wherein the glass tube (8.9) and transparent polymer shield (8.10) are adaptively curved and project out from the body (8.8) of the TPD such that the gas-liquid levels are visible through 180° approximately allowing an operator to intuitively notice the gas liquid levels from afar.

10. The device as claimed in any of the preceding claims, wherein the shape of the transparent enclosure is adapted to allow natural light to come into the gas-liquid viewing enclosure from a wide variety of directions, lighting up the liquid-gas level threshold and the float that through its natural buoyancy will hover at the gas-liquid level threshold.

11. An liquid filled transformer comprising a protection device as claimed in claims 1-10.
